# EUROPEAN PATENT SPECIFICATION

(11) **EP 0 356 698 B1**
(45) Date of publication and mention of the grant of the patent: **30.03.1994**
(21) Application number: 89113587.3
(22) Date of filing: 24.07.1989
(51) Int. Cl.: B01D 53/26

(54) **Method and apparatus for cleaning atmosphere gas used in making high-purity fine particles of reactive metals**
Methode und Apparat zum Reinigen von Atmosphärengas, das für die Herstellung hochreiner feiner Partikel von reaktiven Metallen verwendet wird
Méthode et appareil pour la purification de gaz d'atmosphère utilisé dans la préparation des particules fines de grande pureté de métaux réactifs

(30) Priority: 25.07.1988 JP 183672/88; 02.08.1988 JP 192037/88; 02.08.1988 JP 192038/88
(43) Date of publication of application: 07.03.1990
(60) Divisional application: 93106256.6
(73) Proprietor: Ishikawajima-Harima Heavy Industries Co., Ltd., Tokyo 100 (JP); IHI MASTER METAL LTD., Koutoh-ku Tokyo (JP)
(72) Inventor: Yamaguchi, Toru, Sakura-shi Chiba (JP); Inazuki, Yukio, Sayama-shi Saitama (JP); Nakazawa, Hideo, Funabashi-shi Chiba (JP)
(74) Representative: Schaumburg, Thoenes & Thurn

(56) References cited:
- FR-A- 2 340 765
- PATENT ABSTRACTS OF JAPAN, vol.1, no. 45 (C-76)(1699) 04 May 1977, & JP-A-51 151694 (DORYOKURO-KAKUNENRYO KATHATSU JIGYODAN) 27 December 1976
- PATENT ABSTRACTS OF JAPAN, vol.11, no. 300 (C-449)(2747) 29 September 1987, & JP-A-62 95116 (MITSUBISHI HEAVY IND LTD) 01 May 1987
- KIRK-OTHMER Encyclopedia of Chemical Technology, 3rd ed., 1978, vol. 3, pp. 458, 459, 461
- KIRK-OTHMER Encyclopedia of Chemical Technology, 3rd ed., 1983, vol. 21, p. 185

## Description

The present invention generally relates to a method and apparatus for cleaning atmosphere gas adapted to make high-purity fine particles of reactive metals. More particularly, it relates to a method of removing moisture remaining in the atmosphere gas in a trace amount to an extremely low content level in manufacturing high-purity fine particles of reactive metals, the metals being reactive especially in terms of liability to forming hydroxides (the "reactive metals," e.g., metals of IIa, IIIa, IVa and IVb families in the periodical table), as well as to an apparatus for generating Na vapor to be used in the gas cleaning step.

In treating reactive metals generally, the practice of providing an inert or vacuum environment to which the metals are exposed is known in the art.

In connection with treating reactive metals, there is presently a strong need for manufacturing high-purity fine particles, especially those which are apt to form hydroxides (e.g., the IIa, IIIa, IVa and IVb family metals in the periodical table, hereinafter referred to as "reactive metals") from a sector of advanced materials such as superconducting materials. Here, one technical problem is that an ordinary inert gas atmosphere or vacuum is not good enough for the reactive metals, because they form hydroxides upon reaction with moisture remaining in the environment gas even if the moisture exists in a small amount and the hydroxides give rise to voids or other defects in the product particles, thereby degrading the qualities thereof.

For removing moisture from the atmosphere gas so as to prevent the above defects, the presently common practice is either to use a moisture absorbent such as silica gel, sulfuric acid, sodium hydroxide or anhydrous magnesium perchlorate, or to use a dehumidifying machine of one sort or another. However, these methods are not completely capable of removing the moisture to an extremely low content level (e.g., 10-100 Weight/Volume part per billion (W/V ppb)) that satisfies us in making high-purity fine particles of reactive metals.

With the methods using a moisture absorbent, moreover, there is a problem of the absorbent releasing the moisture it has captured once, if the atmospheric temperature rises or the pressure drops.

KIRK-OTHMER Encyclopedia of Chemical Technology, Third Edition, 1983, volume 21, page 185 teaches a fundamental reaction of alkali metal with moisture, but does not teach a particular application of such a reaction for moisture removal in a container.

The problem to be solved by the present invention is to provide a method of removing moisture from an inert gas atmosphere prepared for manufacturing high-purity fine particles of reactive metals, the metals being reactive especially in terms of liability to forming hydroxides (e.g., metals of the IIa, IIIa, IVa and IVb families in the periodical table, i.e., the "reactive metals") to an extremely low content level (e.g., 10-100 W/V ppb), namely a method of cleaning such atmosphere gas (called the "atmosphere gas cleaning method" hereafter) and an apparatus for generating sodium vapor (the "Na vapor generator") employed therefor.

The invention solves this problem by the features specified in claim 1 or 5. Claims 2 to 4 describe further developments.

In summary, the present invention provides an atmosphere gas cleaning method, a Na vapor generator used therefor.

Moreover, we provide several embodiments to accomplish the above-mentioned purposes.

In a first embodiment, we first let the moisture remaining in the atmosphere gas condense into dew droplets in a manufacturing vessel by cooling the vessel with a cryogenic cooling medium and decompose the dew droplets by bringing the metallic Na into contact with them so as to change them to sodium hydroxide in accordance with the reaction indicated below in order to substantially remove the moisture.

2 · Na + 2 · H₂O → 2 · NaOH + H₂

That is, this process is a form of solid gettering of moisture conducted with metallic Na. Na serves as a solid phase getter.

In a second embodiment, we generate vapor of metallic Na in the atmosphere gas, make it disperse uniformly therein and then decompose the moisture by allowing it to react with Na vapor, thereby transforming it to sodium hydroxide, so as to substantially remove the moisture from the atmosphere gas. This process is then a form of gas phase gettering of moisture conducted with Na vapor. Na vapor serves as a gas phase getter.

In a third variety, first we conduct the solid gettering with metallic Na; namely, we start off by letting the moisture remaining in the atmosphere gas condense into dew droplets in the metal manufacturing vessel by cooling the vessel with a cryogenic cooling medium and decompose the dew droplets by bringing metallic Na into contact with them into sodium hydroxide and remove the moisture in the form of a hydroxide group; subsequent thereto, we conduct the gas phase gettering with Na vapor for the moisture still persisting in an uncondensed trace amount in the atmosphere gas; namely, we generate vapor of metallic Na in the atmosphere gas, letting it disperse uniformly, and decompose the remaining hydrogen by letting it react with Na vapor. Thus, this process is a combination of solid phase gettering and gas phase gettering, both using metallic Na, and we have found that moisture can be removed to an extremely low level content (e.g., 10-100 W/V ppb) this way.

In an atmosphere gas thus cleansed of moisture, manufacturing of high-purity fine particles of the reactive metals can be conducted without fear of incurring purity degradation. Here, the completeness of moisture elimination is in the order of a method of the third variety > the second variety > the first variety.

The Na vapor generator comprises a hermetically sealable vessel to hold and melt metallic Na, a heating device provided covering the vessel so as to heat the metallic Na to melt and further to vaporize it, and a Na vapor outlet nozzle provided at the vessel's free top which can be opened or closed. To generate Na vapor, we place a quantity of metallic Na in the Na vapor generator vessel, close the Na vapor outlet nozzle, cover the vessel with the heating device, let the heating device heat metallic Na to melt and further to vaporize; then we open the Na vapor outlet nozzle to release the Na vapor into the atmosphere gas in order to perform the gas phase gettering. It will be understood that with this apparatus, we are able to generate Na vapor in the atmosphere gas quite simply and safely.

The invention will now be described with reference to the accompanying drawings in which
Figure 1 is a diagram showing a partial cutaway oblique view of one embodiment of the Na vapor generator of the present invention;
Figure 2 is a plan view showing a hermetically sealable vessel used in the present invention;
Figure 3 illustrates a lateral view of Figure 2;
Figure 4 is a diagram showing a plan view of a heating device used in the present invention; and
Figure 5 is a lateral view of Figure 4.

In describing the preferred embodiments of the method and apparatus for cleaning atmosphere gas for making high-purity fine particles of reactive metals of this invention, broadly the method of cleaning the atmosphere gas in manufacturing high-purity fine particles of reactive metals comprises a method of removing moisture remaining in the atmosphere gas (called the "moisture removing method" hereafter). The apparatus for cleaning atmosphere gas for making high-purity fine particles of reactive metals comprises an apparatus for generating Na vapor (the "Na vapor generator").

Now, to describe and discuss the manners of practicing these methods and apparatus first we evacuate the vessel for manufacturing the high-purity fine particles of reactive metal, the metals being reactive especially in terms of their inclination or liability to form hydroxides (e.g., the metals of IIa, IIIa, IVa and IVb families of the periodical table; these metals will be called the "reactive metals,'' and the vessel the "manufacturing vessel" hereafter), then we fill the manufacturing vessel with an inert gas. To remove moisture existing in the manufacturing vessel now filled with the inert gas atmosphere, we bring a cryogenic cooling medium into contact with at least one wall of the vessel. Using liquified nitrogen for the cryogenic cooling medium, we can cool the wall to -150 degrees C or even lower, whereupon the moisture in the atmosphere gas condenses on the wall in the form of dew droplets or more often in the form of ice flakes.

We then remove a rod-shaped lump of metallic Na from a storage bath of oil, such as petroleum, in which it is protected from ignition by the ambient air under the inert atmosphere gas so that it will not ignite, and bring it into contact with the dew droplets thusly formed, whereupon the moisture, now condensed into water (H₂O), reacts with the metallic Na in a chemical reaction,

2 · Na + 2 · H₂O → 2 · NaOH + H₂,

in which reaction the moisture is dissociated and removed in the form of a hydroxide group, and metallic Na serves as the solid getter.

Here, we should emphasize that solid gettering of moisture with metallic Na is most conveniently conducted in a manufacturing vessel and with a cryogenic moisture condenser that we have disclosed in Japanese Patent Application No. 63-218486 filed September 2, 1988.

Now, since the solid gettering with metallic Na can apply itself only to condensed moisture, there still persists a certain amount of moisture in the atmosphere gas, though now in a trace amount. To remove this moisture, we use a piece of metallic Na stored in a container filled with inert gas such as argon. The Na container is placed in the manufacturing vessel, then Na is taken out of the container and heated therein up to about 600 degrees C so as to melt and become vaporized. Whereupon, the Na vapor thus generated disperses, thereby filling up the interior space of the manufacturing space of the manufacturing vessel and reacting with the moisture in the same chemical reaction as described above, thereby forming sodium hydroxide or dissociating the moisture into a hydroxide group so as to substantially remove the moisture
by means of the gas phase gettering of moisture with Na vapor. Na vapor now serves as the gas phase getter. In this manner, we are able to remove the moisture to an extremely low content level (e.g., 10-100 W/V ppb).

Here, we wish to emphasize that this gas phase gettering with Na vapor call be conducted most conveniently in the manufacturing vessel mentioned above and with a "Na vapor generator" which we will describe shortly.

Having described and discussed the above, it should be appreciated, moreover, that the method of removing moisture from the inert gas atmosphere can be put to general purposes, but that it has been devised especially for cleaning the atmosphere gas for making high-purity fine particles of reactive metals. That is to say, we cite particularly three features for this method: the first is the use of metallic Na, which is the most prone to forming hydroxide among the reactive metals (e.g., metals of IIa, IIIa, IVa and IVb families in the periodical table), as the solid or the gas phase moisture getter; the second is that either one or both of these moisture gettering methods can be practiced in accordance with the content level of moisture remaining in the atmosphere gas; and the third is that, besides its simplicity compared with any of the existing methods, this method is capable of not only attaining an extremely low moisture content level, but also of preventing the release of the captured moisture despite changes in temperature and pressure of the atmosphere gas.

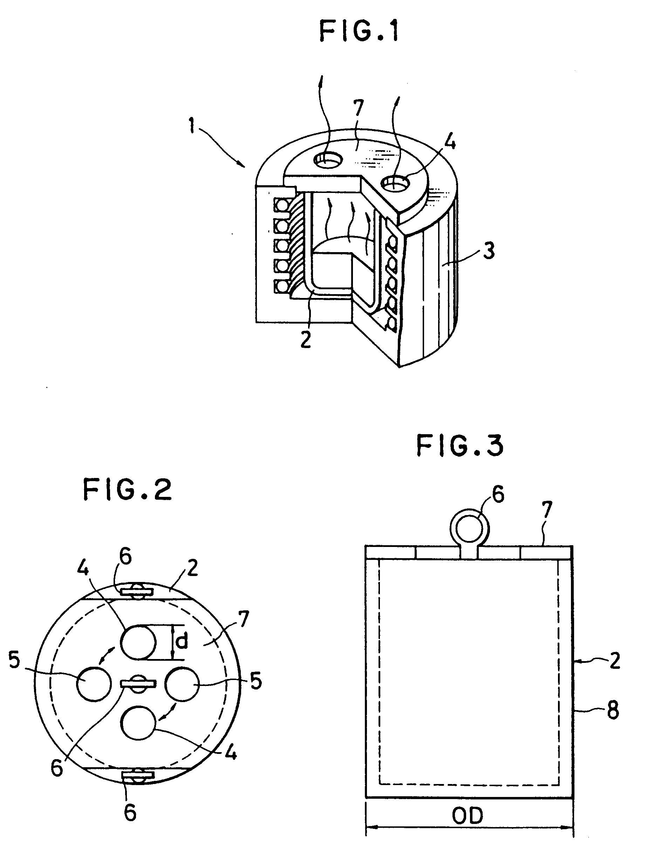

The Na vapor generator used in the gas cleaning method described above will now be disclosed with reference to the attached drawings. As shown in Figure 1, the Na vapor generator comprises a hermetically sealable vessel 2 to hold metallic Na (this vessel will be called the "Na vessel" hereafter) and a heating device 3 which functions to cover and heat the Na vessel 2 from the outside to melt and further vaporize the metallic Na.

In one form of construction, the Na vessel 2 is a hollow cylinder is shown in Figures 2 and 3; for example, it may be a cylinder 98 mm in outer diameter (OD) and 126 mm in height, made of a 6 mm-thick plate of a ferritic stainless steel. At the top of the Na vessel 2, there are provided a pair of openings 4 spaced from each other along a diameter, having both a diameter d, for example, 20 mm, and there are provided a pair of slidable covers 5 that respectively close openings 4. Moreover, the top of the Na vessel 2 is formed into a removable lid 7 and the rest into a receptor 8, so as to facilitate loading of metallic Na. Finally, at the top of the Na vessel 2, there are provided three eyelets 6, one being provided at the center to hang the lid 7 by an overhead crane (not shown) and the other two being provided at the edge, facing each other along the diameter to hang the receptors 8 by the same crane. Overall, the whole of the Na vessel 2 is so designed as to fit into the heating device 3.

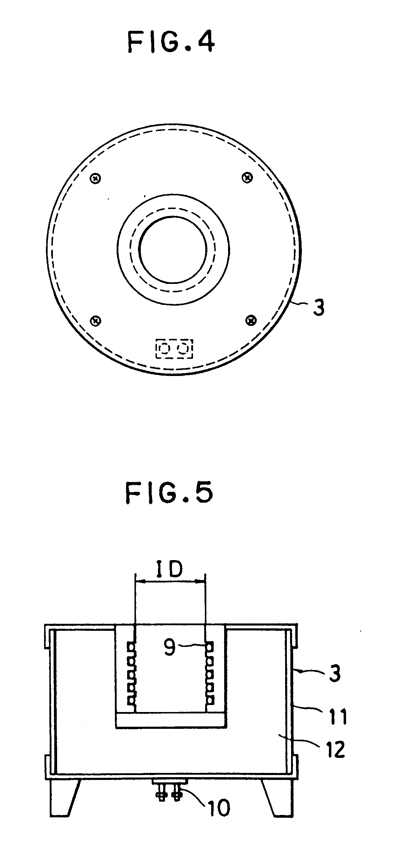

The heating device 3 can, is shown in Figures 4 and 5, be a vertical electric furnace having a fixed bottom. A furnace is employed of the type having a maximum temperature of 1,300 degrees C, e.g., of a type having kanthal wire 9 as the heating element (and equipped with a suitable power source, for example, a variable transformer of a capacity 100V x 20A, maximum). In Figure 5, numeral 10 designates a power connector, 11 a furnace wall, and 12 an insulator. Here, the furnace is of a size, for example, 310 mm in outer diameter, 100 mm in inner diameter (ID), 280 mm in height, and 120 mm in depth, so as to accept the Na vessel 2 with just enough margin in regard to its ID and the Na vessel's OD, and it may be further equipped with a water jacket (not shown).

According to one manner in which we put the Na vapor generator 1 to actual service, we employ the Na vessel 2 for double purpose, one as a metallic Na storage container and the other as a crucible for melting and vaporizing the metallic Na. Namely, when loading lumps of metallic Na into the Na vessel 2, we place them in a bath of oil such is petroleum made therein so as to protect them from unintentional ignition. Then we tightly close the Na vessel 2 by putting the lid 7 on and the two openings 4 by closing the slidable covers 5, take the Na vessel 2 into the manufacturing vessel, and fit it into the heating device (electric furnace) 3, which has already been placed in the manufacturing vessel.

We then form an atmosphere of inert gas in the manufacturing vessel and, having confirmed that the atmosphere is inert, we remove the oil from the Na vessel 2 and supply power to the heating device (electric furnace) 3 so as to melt the metallic Na in the vessel 2. When the Na has been sufficiently vaporized, we move the sliding covers 5 to open the nozzles 4, from which we let out the Na vapor jet to be dispersed in the interior of the manufacturing vessel, there to undertake the gas phase gettering, thereby removing the moisture remaining in the atmosphere gas to an extremely low level content (e.g., 10-100 W/V ppb) as described earlier.

Here, the use of the Na vessel 2 for the dual service of storing and then melting the metallic Na can be appreciated as ensuring safety in and simplifying the operation of Na vapor generation. However, other manners of usage are possible, for example, by locating the entire Na vapor generator 1 externally, and by leading a hermetically sealed conduit line from the nozzles 4 into the manufacturing vessel so as to introduce the Na vapor from outside into the atmosphere gas. It should be further noted here that the specification herein of the particular temperature of 600 degrees C for the maximum heating temperature of metallic Na has been made merely to conform with the use of a ferritic stainless steel as the material of the Na vessel 2.

## Claims

1. A method of cleaning atmosphere gas in a container used in making high-purity fine particles of reactive metals, comprising the steps of:
(A) introducing the atmosphere gas into the container;
(B) cooling at least one wall of the container such that the moisture existing in the container is condensed on the cooled wall of the container; and
(C) removing the condensed moisture by a lump of metallic Na so as to fix the moisture in the form of NaOH thereby removing the moisture from the gas in the container.

2. A method as delineated in claim 1, characterized in that the method further includes the steps of:
(D) heating the container to vaporize Na and allowing the Na vapor further absorb the moisture still remaining in the container.

3. A method as delineated in claim 2, characterized in that the step (A) is carried out by heating the container at a temperature of 600 degrees C.

4. An apparatus for cleaning the atmosphere gas used in manufacturing high-purity fine particles of reactive metals, characterized in that the apparatus comprises:
a hermetically sealable container (2) for containing metallic Na;
a heating device (3) for externally heating the container (2) so as to generate Na vapor; and
at least one nozzle (4) provided at the top of the container (2), said nozzle (4) being openable from a closed condition so as to release the Na vapor from the container.

## Patentansprüche

1. Verfahren zum Reinigen von Atmosphärengas, das zur Herstellung hochreiner feiner Partikel von reaktiven Metallen verwendet wird, in einem Behälter, gekennzeichnet durch:
(A) Einleiten des Atmosphärengases in den Behälter;
(B) Kühlen von zumindest einer Behälterwand, so daß die in dem Behälter vorhandene Feuchtigkeit an der gekühlten Behälterwand kondensiert wird, und
(C) Entfernen der kondensierten Feuchtigkeit durch einen Klumpen von metallischem Na, so daß die Feuchtigkeit in Form von NaOH gebunden und dadurch aus dem Gas in dem Behälter entfernt wird.

2. Verfahren nach Anspruch 1, dadurch gekennzeichnet, daß
(D) der Behälter erwärmt wird, um das Na zu verdampfen und um zu ermöglichen, daß der Na-Dampf die noch in dem Behälter verbleibende Feuchtigkeit weiter absorbiert.

3. Verfahren nach Anspruch 2, dadurch gekennzeichnet, daß Schritt (D) ausgeführt wird, indem der Behälter bei einer Temperatur von 600°C erwärmt wird.

4. Vorrichtung zum Reinigen von Atmosphärengas, das zur Herstellung hochreiner feiner Partikel von reaktiven Metallen verwendet wird, gekennzeichnet durch:
einen hermetisch abschließbaren Behälter (2) zur Aufnahme von metallischem Na;
eine Heizvorrichtung (3) zum externen Erwärmen des Behälters (2) derart, daß Na-Dampf erzeugt wird;
und mindestens eine an der Oberseite des Behälters (2) vorgesehene Düse (4), die aus einem geschlossenen Zustand heraus geöffnet werden kann, um Na-Dampf aus dem Behälter abzulassen.

## Revendications

1. Procédé de purification, dans un récipient, du gaz atmosphérique utilisé dans la préparation de particules fines de grande pureté de métaux réactifs, comprenant les étapes consistant à :
(A) introduire le gaz atmosphérique dans le récipient ;
(B) refroidir au moins une paroi du récipient, de telle sorte que l'humidité présente dans le récipient soit condensée sur la paroi refroidie du récipient ; et
(C) éliminer l'humidité condensée au moyen d'une masse de Na métallique, de manière à fixer l'humidité sous la forme de NaOH, en éliminant ainsi l'humidité du gaz présent dans le récipient.

2. Procédé selon la revendication 1, caractérisé en ce qu'il comprend l'étape supplémentaire consistant à :
(D) chauffer le récipient pour vaporiser le Na, et permettre à la vapeur de Na d'absorber l'humidité résiduelle encore présente dans le récipient.

3. Procédé selon la revendication 2, caractérisé en ce que l'étape (D) est mise en oeuvre en chauffant le récipient à une température de 600°C.

4. Dispositif pour la purification du gaz atmosphérique utilisé dans la préparation de particules fines de grande pureté de métaux réactifs, caractérisé en ce que le dispositif comprend :
un récipient (2), pouvant être hermétiquement scellé et destiné à contenir du Na métallique ;
un élément chauffant (3) pour chauffer extérieurement le récipient (2) afin de produire de la vapeur de Na ; et
au moins une buse (4) agencée sur le dessus du récipient (2), ladite buse (4) pouvant être ouverte à partir d'un état fermé pour évacuer la vapeur de Na présente dans le récipient.
